# EUROPEAN PATENT SPECIFICATION

(11) **EP 2 870 369 B1**
(45) Date of publication and mention of the grant of the patent: **30.12.2015**
(21) Application number: 12816802.8
(22) Date of filing: 26.11.2012
(51) Int. Cl.: F16B 12/44, A47B 13/00, A47B 13/02

(54) **THE TABLE LEG SYSTEM**
TISCHBEINSYSTEM
SYSTÈME DE PIED DE TABLE

(30) Priority: 09.07.2012 PL 39985712
(43) Date of publication of application: 13.05.2015
(73) Proprietor: Nowy Styl Spolka Z.o.o., 38-400 Krosno (PL)
(72) Inventor: KORTE, Jens, 22297 Hamburg (DE)
(74) Representative: Pawlowski, Adam
(86) International application number: PCT/PL2012/000128
(87) International publication number: WO 2014/011062

(56) References cited:
- EP-A1- 0 458 042
- DE-U1-202006 007 300
- DE-U1-202008 005 614

## Description

The object of the invention consists of a table leg system meant for being blocked against the tabletop or against a set of tables combined in modules.

Patent specification no. PL 194803 presents a particular frame: the basis of a set of office tables which contains at least two sets of legs connected with perforated profiles and is equipped with tubular legs attached permanently and solidly in pairs with a groove, square profile. There are connection blocks with transverse ports set in this profile, and the blocks are connected with the table frame's longitudinal profiles, the ends of which hold bolts which enter the transverse ports of the blocks. The bolts have transverse conic grooves to fit the cone point screws which block the movement of the frame profiles against the closed profile that connects the legs.

There are also to be found descriptions of bases made up of pairs of legs attached to the frame profiles with furniture connectors, e.g. off-center connectors, such as presented in the specification DE 41 10 809, or screw fasteners, as in the specification DE 30 39 421. These connectors require complicated off-center or screw elements, or else expansion clips let into a tube, as described in specification EP 403 852.

Patent specification EP 1915923 demonstrates, in turn, a backing plate which is fastened to the tabletop, and the leg of the system is equipped with a sliding key which enters the groove and becomes wedged in the backing plate.

The above-mentioned examples present solutions which are complicated, time-consuming, and require acute precision in order for one to achieve a stable, clearance-free connection.

A prior art table leg system is known from DE 20 2006 007300 U1.

The purpose of the invention has been to create a table leg system attached to the tabletop with the use of simple connectors which could be produced with simple and low-cost technologies, as well as a table leg which would be the connector of two tabletops at the same time.

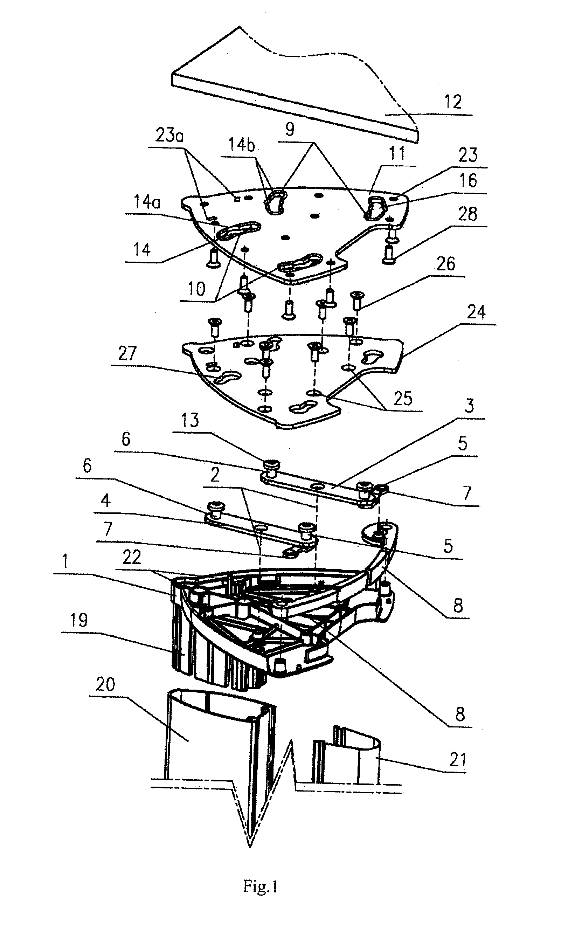

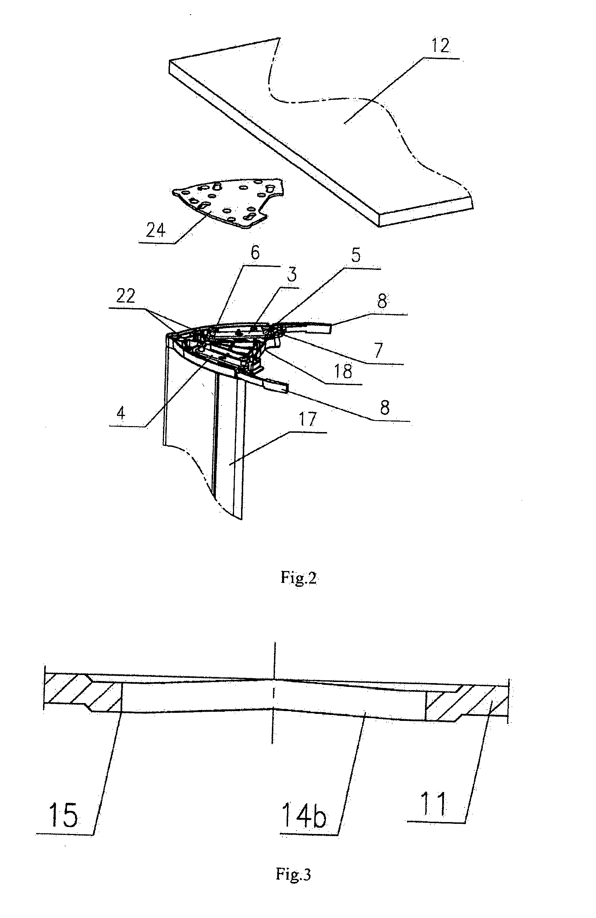

This purpose has been achieved in the invented solution, where the table leg system meant for being blocked against the tabletop or against a set of tables combined in modules, possesses a case over the assembly mechanism, which is perpendicular to the longitudinal axis of the leg to which the casing is screwed from the side of the tabletop. The casing has formed grooves and is attached through ports with the help of screws. In the case there are rotation axes of the case's little levers, and the levers are terminated on both ends with fastening, blocking tangs perpendicular to the levers. One of the ends of the lever is attached to an oscillating hinged connector, which has a pivot handle installed at the other end. The fastening, blocking tangs cooperate with the pairs of formed grooves in the plate fixed to the underside of the tabletop/tabletops. The pairs of the formed grooves are made up of the right and the left groove and exist in the form of a port connected on both sides along a curve with narrowed extensions where blocking ribs are to be found. The grooves have a common longitudinal axis which consists of a curve of a radius equivalent to the radius set out by the fastening, blocking tangs of the levers turned on the axis. The pairs of formed hollows are located symmetrically relative to the symmetry axis of the plate, and the axes going through the ports run at a 45-degree angle to one another. The fastening, blocking tangs are equipped with a flange in their upper part which corresponds to the port in the plate. The casing from the side of the tabletop is of an outward shape which corresponds with the shape of the case and fits within the case. The casing has a groove located underneath the free ends of the handles in the position of the table leg being attached to the tabletop, whereas the curves of the handles in this position form a common ridge with the ridge of the casing located by the groove. The casing has a perpendicular, springy lobe on the same side as the entry into the profile of the leg, and the leg is made up of a profile and an attached casing for wires. On the side of the tabletop, the casing has two locking lips which base the table leg system in relation to the tabletop through ports made in the plate. The advantage of the above solution is a fast, solid and secure assembly of the table without the need for additional elements or tools. Fastening the leg is quick and stable and can be performed in any kind of conditions and circumstances by unskilled persons. The solution assures an esthetic shape of the leg-tabletop connection. An example of how a furniture frame is made in accordance with the invention has been presented in the illustrations below, where fig.1 is a three-dimensional view of the table leg system in the state of non-assembly; fig.2 presents a three-dimensional view of the table leg system in a semi-assembled state; fig.3 shows a three-dimensional view of the formed groove in the backing plate; fig.4 is a view from below the assembled table leg system, with the backing plates unblocked; fig.5 gives a view of the table leg system as attached to two tabletops. The description to the figures is given below.

The table leg system consists of a case 1 which holds the mechanism of the leg's subassembly and the plate 11 fixed to the tabletop 12. The tabletop 12 in the spot where the backing plate 11 is screwed to it has a furrowing of a depth corresponding to that of the backing plate 11. Additionally in the place of the sliding of the blocking tang 5 and 6 in the backing plate 11 in the pair of grooves 9 and 10 there is an extra furrow which is a reflection of the flange 13 of the blocking tang 5 and 6. To a tabletop 12 of such making, the backing plate 11 is screwed through the ports 23 with the use of screws 28. In the case 1 on the levers 3 and 4 are fixed the blocking tangs 5 and 6 whose upper parts are terminated with a flange 13 of a diameter which corresponds the groove 27 of the casing 24 as well as the port 14a in the backing plate 11 and the furrowing in the tabletop 12. To the extremity of each of the levers 3 and 4 a connector 7 is attached in an oscillating way, and to the other end of the connector 7 a handle 8 is attached, also in an oscillating way. The movement of the other end of the handle 8 results in the movement of the blocking tangs 5 and 6 around the periphery, in relation to the rotation axis 2 of the lever, and at the same time in relation to the fixing point of each of the levers 3 and 4. The whole mechanism is covered from above with a casing 24 which also possesses assembly ports 25, through which it is fixed to the case 1 with screws 26 and it has formed grooves 27 in which the blocking tangs 5 and 6 slide. The case 1 is, on the side of the leg 17, terminated with a perpendicular, springy lobe 19 which corresponds with the shape of the leg; it is upon this lobe that the leg 17 is fixed. The leg 17 consists of a main profile 20 and casing 21 for wires which is attached in a snap-on way at the side. Such a subassembly is brought to the tabletop 12 in a way that enables the lobes 22 of the case 1to fit the ports 23a of the backing plate 11, and the blocking tangs 5 and 6 went through the opening 23 in the backing plate 11. Having placed the subassembly in relation to the tabletop 12 in such a manner, one needs to move the handles 8 towards the groove 18 in the case 1. Then the sliding of the blocking tangs 5 and 6 is commenced, going from port 14a, along the rib 15 on the extension 14b of the grooves 14 and 16, and then the table leg system with the case 24 is automatically pressed together with the backing plate 11, and thus the tabletop 12.

In another example of a realization of the invention, the leg 17 is placed on the connecting line of the tabletop 12a and 12b in such a way that one lobe 22 of the case 1 is in port 23a of the backing plate 11 fixed to the tabletop 12a, and the other lobe 22 of the case 1 is in port 23a of the backing plate 11 fixed to tabletop 12b. In this position the lever 3 will cooperate with the pair of grooves 9, while the lever 4 will cooperate with the pair of grooves 10.

The object of the invention accordingly to the specification may be used to support the tabletop, thus constituting a stable construction of single tables, as well as that of combinations of office tables, conference tables, tables in dining-rooms or restaurants; it allows for various arrangements of tables.

## Claims

1. A table leg system meant for being blocked against a tabletop or against a set of tables combined in modules, wherein an upper end of the table leg system is equipped with a case (1) over an assembly mechanism, perpendicular to a longitudinal axis of the leg to which a casing (24) with formed hollows (27) is screwed from the side of the tabletop (12) and in that in the case (1) there are levers (3,4) and levers' (3, 4) rotating axes (2) in relation to the case (1) itself, and the levers (3, 4) are at both ends terminated with fastening, blocking tangs (5, 6) perpendicular to the lever (3, 4), and one of the ends of each of the levers (3, 4) is attached to an oscillating hinged connector (7), which has a pivot handle (8) installed at the other end and the fastening, blocking tangs (5, 6) cooperate with pairs of grooves (9, 10) formed in a plate (11) fixable to the underside of the tabletop (12) or tabletops (12a, 12b).

2. The table leg system according to claim 1, **characterized in that** that the pairs of the formed grooves (9, 10) comprise a right groove (14) and a left groove (16) and have the form of a port (14a) connected on both sides along a curve with narrowed extensions (14b) with blocking ribs (15) and **in that** the grooves (14, 16) have a common longitudinal axis which consists a curve of a radius equivalent to the radius of the fastening, blocking tangs (5, 6) of the levers (3, 4) turned around the axis (2).

3. The table leg system according to claim 1, **characterized in that** that the grooves (9, 10) have a common longitudinal axis which consists a curve of a radius equivalent to the radius set out by the fastening, blocking tangs of the levers turned around the axis. The pairs of formed hollows are positioned symmetrically relative to the symmetry axis of the plate (11), and the axes going through the ports (14a) run at a 45-degree angle to one another.

4. The table leg system according to claim 1, **characterized in that** that the fastening, blocking tangs (5, 6) are equipped with a flange (13) in their upper part which corresponds the port (14a) in the plate.

5. The table leg system according to claim 1, **characterized in that** that the casing (24) from the side of the tabletop (12) has an external shape which corresponds to the shape of the case (1) and fits within the case (1).

6. The table leg system according to claim 1, **characterized in that** that the case (1) has a groove (18) located underneath the free ends of the handles (8) for the position of the table leg (17) being attached to the tabletop (12), whereas the curves of the handles (8) in this position form a common ridge with the ridge of the case (1) located by the groove (18).

7. The table leg system according to claim 1, **characterized in that** the case (1) has a perpendicular, springy lobe (19) on the same side as the entry into the profile of the leg (17), and the leg (17) is made up of a profile (20) and an attached casing (21) for wires.

8. The table leg system according to claim 1, **characterized in that** on the side of the tabletop, the case (1) has two locking lips (22) which base the table leg system in relation to the tabletop (12) through ports (23) made in the plate (11).

## Patentansprüche

1. Tischbeinsystem für eine Verriegelung an einer Tischplatte oder an einer Reihe von Tischen, die in Modulen kombiniert sind, wobei ein oberes Ende des Tischbeinsystems mit einem Gehäuse (1) über einem Montagemechanismus ausgestattet ist, senkrecht zu einer Längsachse des Beins, an das eine Verkleidung (24) mit ausgebildeten Hohlräumen (27) von der Seite der Tischplatte (12) geschraubt wird, und wobei sich in dem Gehäuse (1) Hebel (3, 4) befinden; und
Drehachsen (2) der Hebel (3, 4) im Verhältnis zu dem Gehäuse (1) selbst, und wobei die Hebel (3, 4) an beiden Enden mit befestigenden Sperrzapfen (5, 6) senkrecht zu dem Hebel (3, 4) abgeschlossen sind, und wobei eines der Enden jedes der Hebel (3, 4) an einem oszillierenden gelenkigen Verbinder (7) angebracht ist, der einen Drehgriff (8) aufweist, der an dem anderen Ende angebracht ist, und wobei die befestigenden Sperrzapfen (5, 6) mit Paaren von Rillen (9, 10) zusammenwirken, die in einer Platte (11) ausgebildet sind, die an der Unterseite der Tischplatte (12) oder der Tischplatten (12a, 12b) angebracht werden können.

2. Tischbeinsystem nach Anspruch 1, **dadurch gekennzeichnet, dass** die Paare der gebildeten Rillen (9, 10) eine rechte Rille (14) und eine linke Rille (16) umfassen und die Form einer Öffnung (14a) aufweisen, die auf beiden Seiten entlang einer Krümmung mit schmalen Extensionen (15b) mit Sperrrippen (15) verbunden sind, und wobei die Rillen (14, 16) eine gemeinsame Längsachse aufweisen, die aus einer Krümmung mit einem Radius besteht, der dem Radius der befestigenden Sperrzapfen (5, 6) der Hebel (3, 4) entspricht, um die Achse (2) gedreht.

3. Tischbeinsystem nach Anspruch 1, **dadurch gekennzeichnet, dass** die Rillen (9, 10) eine gemeinsame Längsachse aufweisen, die aus einer Krümmung mit einem Radius besteht, der dem Radius entspricht, der durch die befestigenden Sperrzapfen der Hebel gebildet wird, um die Achse gedreht, wobei die Paare der gebildeten Hohlräume symmetrisch im Verhältnis zu der Symmetrieachse der Platte (11) positioniert sind, und wobei die durch die Öffnungen (14a) verlaufenden Achsen in einem Winkel von 45 Grad zueinander verlaufen.

4. Tischbeinsystem nach Anspruch 1, **dadurch gekennzeichnet, dass** die befestigenden Sperrzapfen (5, 6) in ihrem oberen Teil mit einem Flansch (13) ausgestattet sind, der der Öffnung (14a) in der Platte entspricht.

5. Tischbeinsystem nach Anspruch 1, **dadurch gekennzeichnet, dass** die Verkleidung (24) von der Seite des Tischbeins (12) eine äußere Form aufweist, die der Form des Gehäuses (1) entspricht und in das Gehäuse (1) passt.

6. Tischbeinsystem nach Anspruch 1, **dadurch gekennzeichnet, dass** das Gehäuse (1) eine Rille (18) aufweist, die sich unter den freien Enden der Griffe (8) befindet, um das an der Tischplatte (12) angebrachte Tischbein (17) zu positionieren, während die Krümmungen der Griffe (8) an dieser Position einen gemeinsame Grat mit dem Grat des Gehäuses (1) bilden, der durch die Rille (18) positioniert wird.

7. Tischbeinsystem nach Anspruch 1, **dadurch gekennzeichnet, dass** das Gehäuse (1) eine senkrechte elastische Nase (19) auf der gleichen Seite wieder der Zugang zu dem Profil des Beins (17) aufweist, und wobei das Bein (17) aus einem Profil (20) und einer angebrachten Verkleidung (21) für Drähte gebildet wird.

8. Tischbeinsystem nach Anspruch 1, **dadurch gekennzeichnet, dass** auf der Seite der Tischplatte das Gehäuse (1) zwei Verriegelungslippen (22) aufweist, welche das Tischbeinsystem im Verhältnis zu der Tischplatte (12) durch in der Platte (11) erzeugte Öffnungen (23) erzeugen.

## Revendications

1. Système de pied de table destiné à être bloqué contre un dessous de table ou contre un ensemble de tables combinées en modules, une extrémité supérieure du système de pied de table comprenant un coffret (1) sur un mécanisme d'assemblage, perpendiculaire à un axe longitudinal du pied auquel un boîtier (24) ayant des creux formés (27) est vissé depuis le côté du dessous de table (12), et dans le coffret (1) se trouvant des leviers (3, 4) et des axes (2) de rotation des leviers (3, 4) par rapport au coffret lui-même (1), et les leviers (3, 4) étant aux deux extrémités terminés par des pinces (5, 6) de blocage de fixation perpendiculaires au levier (3, 4), et l'une des extrémités de chacun des leviers (3, 4) étant fixée à un connecteur (7) articulé oscillant, qui a une poignée pivotante (8) installée à l'autre extrémité, et les pinces (5, 6) de blocage de fixation coopérant avec des paires de rainures (9, 10) formées dans une plaque (11) pouvant être fixée au côté inférieur du dessous de table (12) ou des dessous de table (12a, 12b).

2. Système de pied de table selon la revendication 1, **caractérisé en ce que** les paires des rainures (9, 10) formées comprennent une rainure droite (14) et une rainure gauche (16) et ont la forme d'un orifice (14a) connecté des deux côtés le long d'une courbe ayant des extensions rétrécies (14b) avec des nervures de blocage (15) et **en ce que** les rainures (14, 16) ont un axe longitudinal commun qui consiste en une courbe d'un rayon équivalent au rayon des pinces (5, 6) de blocage de fixation des leviers (3, 4) tournés autour de l'axe (2).

3. Système de pied de table selon la revendication 1, **caractérisé en ce que** les rainures (9, 10) ont un axe longitudinal commun qui consiste en une courbe d'un rayon équivalent au rayon fixé par les pinces de blocage de fixation des leviers tournés autour de l'axe, les paires de creux formés étant placées symétriquement par rapport à l'axe de symétrie de la plaque (11), et les axes traversant les orifices (14a) formant un angle de 45 degrés l'un par rapport à l'autre.

4. Système de pied de table selon la revendication 1, **caractérisé en ce que** les pinces (5, 6) de blocage de fixation comprennent une bride (13) dans leur partie supérieure qui correspond à l'orifice (14a) dans la plaque.

5. Système de pied de table selon la revendication 1, **caractérisé en ce que** le boîtier (24) depuis le côté du dessous de table (12) a une forme externe qui correspond à la forme du coffret (1) et s'insère dans la boîte (1).

6. Système de pied de table selon la revendication 1, **caractérisé en ce que** le coffret (1) a une rainure (18) située sous les extrémités libres des poignées (8) pour la position du pied de table (17) fixé au dessous de table (12), tandis que les courbes des poignées (8) dans cette position forment une arête commune avec l'arrête du coffret (1) située à côté de la rainure (18).

7. Système de pied de table selon la revendication 1, **caractérisé en ce que** le coffret (1) a un lobe élastique perpendiculaire (19) du même côté que l'entrée dans le profilé du pied (17), et le pied (17) comprend un profilé (20) et un boîtier (21) fixé pour des fils.

8. Système de pied de table selon la revendication 1, **caractérisé en ce que** sur le côté du dessous de table, le coffret (1) a deux lèvres de verrouillage (22) qui placent le système de pied de table par rapport au dessous de table (12) à travers des orifices (23) pratiqués dans la plaque (11).
